# EUROPÄISCHE PATENTANMELDUNG

(11) **EP 1 535 716 A1**
(43) Veröffentlichungstag der Anmeldung: **01.06.2005**
(21) Anmeldenummer: 04027401.1
(22) Anmeldetag: 18.11.2004
(51) Int. Cl.: B29C 47/00, B29C 47/88, B29C 47/90

(54) **Vorrichtung und Verfahren zur Herstellung von Blasfolien**

(30) Priorität: 28.11.2003 DE 10355809
(71) Anmelder: LANXESS Deutschland GmbH, 51369 Leverkusen (DE)
(72) Erfinder: Littek, Wolfram, Dipl-Ing., 42699 Solingen (DE)

(57) **Zusammenfassung**

Die Erfindung beschreibt eine Vorrichtung zur Herstellung von Blasfolien, wenigstens bestehend aus einem Extruder (1), dessen Austritt mit einer ringförmigen Düse (2) verbunden ist, einer oberhalb oder unterhalb der Düse (2) angeordneten Flachlegeeinrichtung (6, 7) und einer zwischen der Düse (2) und der Flachlegeeinrichtung (6, 7) angeordneten ringförmigen Kühleinrichtung (3). Die Vorrichtung ist dadurch gekennzeichnet, dass eine Saugvorrichtung (4) zwischen der Düse (2) und der Flachlegeeinrichtung (6, 7) angeordnet ist.

## Beschreibung

Die Erfindung betrifft eine Vorrichtung sowie ein Verfahren zur Herstellung von Blasfolien.

Die Herstellung von Blasfolien ist aus dem Stand der Technik hinlänglich bekannt. Dem Prinzip nach wird eine heiße Kunststoffschmelze, welche aus einem Extruder austritt, durch eine ringförmige Düse zu einer schlauchförmigen Folie ggf. über einen Umlenkkopf im Wesentlichen senkrecht nach oben extrudiert. Der Folienschlauch wird beim Austritt aus der Düse durch Luft, die in das Innere des Folienschlauches eingeblasen wird, auf den gewünschten Außendurchmesser aufgeblasen, wodurch sich in Abhängigkeit von der gewählten Abzugsgeschwindigkeit, die gewünschte Foliendicke einstellt. Dabei wird die Blasfolie mit Hilfe eines Kalibrierkorbes, welcher den Folienschlauch umgibt, gestützt und stabilisiert. Gleichzeitig wird der Folienschlauch mit Hilfe von Luft von außen und/oder innen gekühlt. Der abgekühlte Folienschlauch wird anschließend mit Hilfe einer Flachlegeeinrichtung, z.B. ein Walzenpaar, zu einer flachen Folie zusammengelegt.

Verfahren zur Herstellung solcher Blasfolien sind beispielsweise aus J. Nentwig, Kunststoff-Folien, Herstellung - Eigenschaften - Anwendung, 2. überarbeitete Auflage, Carl Hanser Verlag München Wien, 2000, Kapitel 3.2.6 Blasfolien, Seite 53-56 und aus O. E. Ahlhaus, Verpackung mit Kunststoffen, Carl Hanser Verlag München Wien, 1997, Kapitel 6.1.1 Herstellungsverfahren für Verpackungsfolien, Seite 110-113 bekannt.

In der Praxis tritt das Problem auf, dass aus der heißen Kunststoffschmelze, welche aus der Düse austritt, flüchtige Komponenten, z.B. Monomere, Oligomere Additive, Abbauprodukte o.dgl. ausgasen. Je nachdem, um welche flüchtigen Komponenten es sich handelt, führen diese Gase, Dämpfe, Aerosole o.dgl. zu einer Geruchsbelästigung oder gar Schadstoffbelastung in der Umgebung der Blasfolienanlage. Außerdem können sich die Ausgasungen an Bauteilen der Blasfolienanlage, wie z.B. dem Kalibrierkorb, niederschlagen. Diese Ablagerungen erfordern eine besondere Reinigung der Anlage und verursachen einen erhöhten Instandhaltungsaufwand. Darüber hinaus können Partikel der Ablagerungen auf die Folie herabfallen, was die Folienqualität sowie ggf. die Wickelqualität der Folie beeinträchtigt.

Aufgabe der vorliegenden Erfindung ist es, eine Vorrichtung sowie ein Verfahren zur Herstellung von Blasfolien bereitzustellen, bei dem Ausgasungen von flüchtigen Komponenten aus der Kunststoffschmelze nicht zu Ablagerungen durch Kondensation an Bauteilen der Blasfolienanlage führen.

Die Aufgabe wird durch eine Vorrichtung gelöst, bei der die Ausgasungen nach dem Austritt des Folienschlauches aus der Düse mit Hilfe einer Saugvorrichtung abgesaugt werden.

Gegenstand der Erfindung ist demnach eine Vorrichtung zur Herstellung von Blasfolien, wenigstens bestehend aus einem Extruder, dessen Austritt mit einer ringförmigen Düse verbunden ist, einer oberhalb oder unterhalb der Düse angeordneten Flachlegeeinrichtung und einer zwischen der Düse und der Flachlegeeinrichtung angeordneten ringförmigen Kühleinrichtung, dadurch gekennzeichnet, dass eine Saugvorrichtung zwischen der Düse und der Flachlegeeinrichtung angeordnet ist.

Die Saugvorrichtung, welche erfindungsgemäß aus der Kunststoffschmelze ausgasende flüchtige Komponenten absaugt, kann prinzipiell in die aus dem Stand der Technik bekannten Vorrichtungen zur Herstellung von Blasfolien integriert werden. Die erfindungsgemäße Vorrichtung umfasst einen Extruder, aus dem im Betrieb eine heiße Kunststoffschmelze austritt. Der Extruder ist an seinem Austritt mit einer ringförmigen Düse verbunden, welche die Kunststoffschmelze zu einem Folienschlauch extrudiert. In der Regel ist der Extruder horizontal angeordnet. Dabei wird die Kunststoffschmelze vor der Düse so umgelenkt, dass der Folienschlauch im Wesentlichen vertikal nach oben extrudiert wird. Die ringförmige Düse ist beispielsweise eine Ringspaltdüse. Der Folienschlauch kann alternativ auch im Wesentlichen vertikal nach unten extrudiert werden. Wenn nicht anders angegeben, beziehen sich die Begriffe "oberhalb" und "unterhalb" nachfolgend auf eine Vorrichtung, bei der der Folienschlauch nach oben extrudiert wird, wobei für eine Vorrichtung mit Abwärtsextrusion dann entsprechend der umgekehrte Aufbau gilt.

In den Folienschlauch wird Luft eingeblasen, um die Folie auf die gewünschte Breite und in Abhängigkeit von der gewählten Abzugsgeschwindigkeit auf die gewünschte Dicke zu bringen.

Niedermolekulare, flüchtige Komponenten treten bevorzugt in Bereichen des Folienschlauches mit hoher Oberflächentemperatur aus, d.h. Ausgasungen sind insbesondere in Bereichen nahe der Düse zu beobachten. Bei den flüchtigen Komponenten kann es sich um Monomere, Oligomere, Additive, Lösungsmittel, Abbauprodukte o.dgl. handeln.

Erfindungsgemäß ist die Saugvorrichtung zwischen der Düse, aus der die Kunststoffschmelze austritt, und der Flachlegeeinrichtung, mit der der abgekühlte Folienschlauch zusammengefaltet wird, angebracht. Wird der Folienschlauch im Wesentlichen vertikal nach oben extrudiert und aus der Flachlegeeinrichtung abgezogen, dann befindet sich die Saugvorrichtung oberhalb der Düse und unterhalb der Flachlegeeinrichtung. Wird in der alternativen Bauform der Blasfolienanlage der Folienschlauch jedoch im Wesentlichen vertikal nach unten extrudiert und abgezogen, dann befmdet sich die Saugvorrrichtung unterhalb der Düse und oberhalb der Flachlegeeinrichtung.

Dabei ist die Saugvorrichtung so positioniert, dass oberhalb der Saugvorrichtung aufgrund der Temperatur der Folie nur noch geringe oder vernachlässigbare Mengen an flüchtigen Komponenten austreten. Die Saugvorrichtung ist außerdem so positioniert, dass die nach oben aufsteigenden Gase, Dämpfe, Aerosole o.dgl. abgesaugt werden, bevor sie sich an Bauteilen der Vorrichtung, wie z.B. der Kühleinrichtung oder ggf. der Kalibriereinrichtung, niederschlagen können.

Die erfmdungsgemäße Vorrichtung zur Herstellung von Blasfolien (im folgenden auch als Blasfolienanlage bezeichnet) weist, wie aus dem Stand der Technik bekannt, zwischen der Düse und der Flachlegeeinrichtung eine ringförmige Kühleinrichtung auf. Bevorzugt ist die Kühleinrichtung nahe der Düse angeordnet. Verläuft der Folienschlauch nach oben, ist die Kühleinrichtung oberhalb der Düse und unterhalb der Flachlegeeinrichtung angeordnet. Mit Hilfe der Kühleinrichtung in der Form eines Kühlringes wird Kühlluft über dem Umfang gleichmäßig gegen den Folienschlauch geblasen. Die nach oben strömende Kühlluft transportiert die Ausgasungen nach oben.

Vorzugsweise ist die Saugvorrichtung zwischen der Kühleinrichtung und der Flachlegeeinrichtung angeordnet. In der nach oben führenden Bauweise der Vorrichtung bedeutet dies, dass die Saugvorrichtung oberhalb der Kühleinrichtung angeordnet ist. Gegebenenfalls kann eine weitere Kühleinrichtung oberhalb der Saugvorrichtung, d.h. zwischen der Saugvorrichtung und der Flachlegeeinrichtung, angeordnet sein. Es können auch mehrere weitere Kühleinrichtungen angeordnet sein.

Aus dem Stand der Technik sind Kühleinrichtungen mit einen variablen Durchmesser bekannt. Dies erlaubt, den Durchmesser der Kühleinrichtung dem Durchmesser des Folienschlauches anzupassen.

Die erfindungsgemäße Vorrichtung besitzt bevorzugt eine Kalibriereinrichtung zwischen der Kühleinrichtung und der Flachlegeeinrichtung, insbesondere zwischen der Saugvorrichtung und der Flachlegeeinrichtung. In der Regel ist somit oberhalb der Kühleinrichtung eine Kalibriereinrichtung angeordnet. Die Saugvorrichtung befindet sich dementsprechend in der nach oben führenden Bauweise der Blasfolienanlage bevorzugt oberhalb der Kühleinrichtung und unterhalb der Kalibriereinrichtung. Die Kalibriereinrichtung dient der Stabilisierung der Folie. Kalibriereinrichtungen, wie sie aus dem Stand der Technik bekannt sind, bestehen in einer einfachen Ausführung aus mehreren Leisten, die zu einem Polygon angeordnet sind, welches den Außendurchmesser des Schlauches begrenzt. Eine bessere Wirkung wird erreicht, indem mehrere derartige Anordnungen in einem gewissen Abstand übereinander angeordnet werden. Eine weitere Verbesserung der Kalibrierung wird erreicht, indem die Leisten durch stabförmige Elemente ersetzt werden, welche die Reibung des Folienschlauches an der Kalibriereinrichtung vermindern. Dies kann mit Hilfe von Bürsten oder Rollen erfolgen. Zur besseren Anpassung an den jeweiligen Blasendurchmesser des Schlauches werden solche Leisten oder stabförmigen Elemente bogenförmig und nicht gerade ausgeführt sowie mittels einer mechanischen Vorrichtung, z.B. Kettentrieb, gemeinsam verstellbar in einem gemeinsamen Rahmen montiert.

Ist der Folienschlauch ausreichend abgekühlt, passiert er in der erfmdungsgemäßen Vorrichtung oberhalb der Kalibriereinrichtung eine Flachlegeeinrichtung. Mit Hilfe der Flachlegeeinrichtung wird der Folienschlauch zu einer flachen Doppelfolie zusammengefaltet, je nach Bedarf auch mit weiteren Einlegefalten o.dgl. Die Flachlegeeinrichtung kann beispielsweise aus einem Walzenpaar bestehen. Zusätzlich können zur Flachlegung des Folienschlauches auch zwei plattenförmige Elemente unterhalb eines Walzenpaares dienen, die keilförmig zueinander angeordnet sind. Diese plattenförmigen Elemente können beispielsweise als einfache Platten, Leistenroste, Rollenbahnen, Bleche, gelochte und/oder gekühlte Bleche ausgeführt sein.

Die Saugvorrichtung, welche in der erfmdungsgemäßen Vorrichtung flüchtige Komponenten absaugt, ist vorzugsweise oberhalb der Kühleinrichtung und unterhalb Kalibriereinrichtung angeordnet. Bevorzugt umschließt die Saugvorrichtung den Folienschlauch ringförmig. Die Saugvorrichtung kann die Schlauchblase alternativ auch in jeder beliebigen Geometrie, z.B. eckig, oval, umgeben. Dazu weist die Saugvorrichtung eine Öffnung auf, durch die der Folienschlauch hindurchgeführt wird. Der Durchmesser dieser Öffnung ist vorzugsweise gerade so gewählt, dass die Saugvorrichtung den Folienschlauch nicht berührt bzw. eine zu starke Reibung zwischen der Saugvorrichtung und der Schlauchblase vermieden wird. Die Öffnung der Saugvorrichtung besitzt vorzugsweise einen variablen Durchmesser, der in Abhängigkeit von dem Durchmesser des Folienschlauches eingestellt werden kann. Dies kann beispielsweise nach dem Prinzip einer Irisblende erfolgen, wobei eine oder mehrere Irisblenden den Durchmesser der Öffnung bestimmen. Dabei kann z.B. sowohl die untere, d.h. der Düse zugewandte, als auch die obere, d.h. der Flachlegeeinrichtung zugewandte, Begrenzung der ringförmigen Saugvorrichtung mit einer Irisblende ausgestattet sein, deren Durchmesser unabhängig oder abhängig voneinander einstellbar sind. In einer alternativen Ausführungsform kann der Durchmesser der Öffnung auch dadurch einstellbar sein, dass die Saugvorrichtung aus mehreren Bauteilen besteht, die unterschiedliche Größen besitzen und austauschbar sind, so dass je nach gewünschtem Durchmesser die Bauteile in der gewünschten Größe ausgewählt werden. So kann die Saugvorrichtung beispielsweise aus mehreren bogenförmigen Bauteilen bestehen, welche zusammengesetzt den Folienschlauch ringförmig umgeben.

Die Saugvorrichtung kann auch analog eines aus dem Stand der Technik bekannten Kühlringes ausgeführt sein. Eine solche Saugvorrichtung wird so betrieben, dass anstelle eines Überdruckes ein Unterdruck angelegt wird, durch den Luft abgesaugt statt eingeblasen wird.

Innerhalb der Saugvorrichtung können Vorrichtungen installiert sein, die eine über dem Umfang gleichmäßige Strömung des abzusaugenden Gemisches aus Luft und Ausgasungen gewährleisten.

Die Saugvorrichtung ist mit mindestens einer Schlauch- oder Rohrleitung zum Absaugen der Ausgasungen versehen. Die Saugvorrichtung ist bevorzugt mit beheizbaren Zu- und Ableitungen versehen, um die Kondensation bzw. den Niederschlag der Ausgasungen in den Zu- und Ableitungen zu vermeiden. Außerdem ist an der Saugvorrichtung bevorzugt eine Kühlfalle für eine kontrollierte Kondensation der Ausgasungen vorgesehen.

Die Saugvorrichtung ermöglicht es, niedermolekulare, flüchtige Komponenten, welche aus dem Folienschlauch ausgasen, abzusaugen. Dies verhindert, dass sich die Ausgasungen auf Bauteilen der Blasfolienanlage, wie z.B. der Kalibriereinrichtung, niederschlagen. Die Verschmutzung der Blasfolienanlage ist somit verringert. Außerdem können keine Partikel der kondensierten Ausgasungen auf die Folie herabfallen, weshalb die Folienqualität verbessert ist.

Weiterer Gegenstand der Erfindung ist ein Verfahren zur Herstellung von Blasfolien unter Verwendung der erfindungsgemäßen Vorrichtung.

Mit Hilfe der erfindungsgemäßen Vorrichtung sowie dem erfindungsgemäßen Verfahren zur Blasfolienherstellung werden Folien z.B. aus Polyamid und Polyolefinen, z.B. Polyethylen, hergestellt. Die Folien können einschichtig oder mehrschichtig sein.

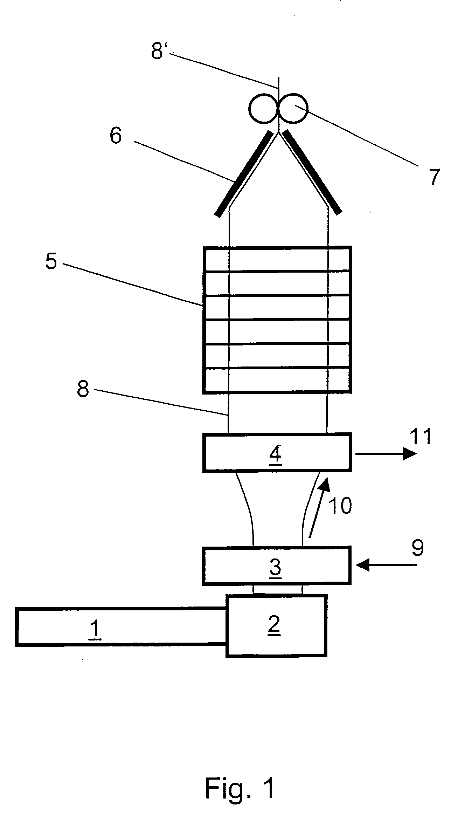

Nachfolgend wird die Erfindung anhand der beigefügten Figur näher erläutert. Figur 1 zeigt schematisch eine erfmdungsgemäße Vorrichtung zur Herstellung von Blasfolien. Ein Extruder 1 ist mit einer Düse 2 verbunden, welche die aus dem Extruder 1 austretende Kunststoffschmelze zu einem Folienschlauch 8 extrudiert. Der Folienschlauch 8 tritt in der dargestellten Ausführungsform im Wesentlichen senkrecht nach oben aus der Düse 2 aus. Beide Funktionen, d.h. die Umlenkung der Kunststoffschmelze von der Horizontalen in die Vertikale sowie die Extrusion des Folienschlauches mittels einer Ringspaltdüse, können in einem einzigen Bauteil integriert sein oder in zwei separaten Bauteilen der Blasfolienanlage erfolgen. In der dargestellten Ausführungsform erfolgt sowohl die Umlenkung als auch die Extrusion in einem einzigen Bauteil, dem Blaskopf.

Oberhalb der Düse 2 ist eine Kühleinrichtung 3 in Form eines Kühlringes angeordnet. Mit Hilfe des Kühlringes 3 wird Kühlluft 9 von außen auf den Folienschlauch 8 geblasen. Die nach oben strömende Kühlluft 10 transportiert Ausgasungen aus dem Folienschlauch 8 in Richtung der Saugvorrichtung 4. Die Saugvorrichtung 4 saugt die Ausgasungen 11 ab. Oberhalb der Saugvorrichtung 4 ist eine Kalibriereinrichtung 5 angeordnet. Diese stabilisiert die Folienschlauchblase 8. Oberhalb der Kalibriereinrichtung 5 ist eine Flachlegeeinrichtung, bestehend aus einem keilförmig zueinander angeordneten Plattenpaar 6 und einem Walzenpaar 7 angeordnet, die der weitgehend abgekühlte Folienschlauch 8 passiert. Die Flachlegeeinrichtung 6, 7 faltet den Folienschlauch 8 zu einer flachen Folie 8' zusammen.

## Patentansprüche

1. Vorrichtung zur Herstellung von Blasfolien, wenigstens bestehend aus einem Extruder (1), dessen Austritt mit einer ringförmigen Düse (2) verbunden ist, einer oberhalb oder unterhalb der Düse (2) angeordneten Flachlegeeinrichtung (6, 7) und einer zwischen der Düse (2) und der Flachlegeeinrichtung (6, 7) angeordneten ringförmigen Kühleinrichtung (3), **dadurch gekennzeichnet, dass** eine Saugvorrichtung (4) zwischen der Düse (2) und der Flachlegeeinrichtung (6, 7) angeordnet ist.

2. Vorrichtung nach Anspruch 1, **dadurch gekennzeichnet, dass** die Saugvorrichtung (4) zwischen der Kühleinrichtung (3) und der Flachlegeeinrichtung (6, 7) angeordnet ist.

3. Vorrichtung nach einem der Ansprüche 1 oder 2, **dadurch gekennzeichnet, dass** zusätzlich eine Kalibriereinrichtung (5) zwischen der Kühleinrichtung (3) und der Flachlegeeinrichtung (6, 7) angeordnet ist.

4. Vorrichtung nach Anspruch 3, **dadurch gekennzeichnet, dass** die Saugvorrichtung (4) zwischen der Kühleinrichtung (3) und der Kalibriereinrichtung (5) angeordnet ist.

5. Vorrichtung nach einem der Ansprüche 1-4, **dadurch gekennzeichnet, dass** die Saugvorrichtung (4) ringförmig ist.

6. Vorrichtung nach Anspruch 5, **dadurch gekennzeichnet, dass** die ringförmige Saugvorrichtung (4) einen variablen Durchmesser hat.

7. Verfahren zur Herstellung von Blasfolien unter Verwendung einer Vorrichtung nach einem der Ansprüche 1-6.
